# EUROPÄISCHE PATENTSCHRIFT

(11) **EP 0 724 001 B1**
(45) Veröffentlichungstag und Bekanntmachung des Hinweises auf die Patenterteilung: **31.03.1999**
(21) Anmeldenummer: 95118257.5
(22) Anmeldetag: 21.11.1995
(51) Int. Cl.: C09J 7/02

(54) **Abdeck- und Dichtungsband**
Masking and sealing tape
Bande de couverture et d'étanchéité

(30) Priorität: 26.01.1995 DE 19502340
(43) Veröffentlichungstag der Anmeldung: 31.07.1996
(73) Patentinhaber: Klauss, Günter, D-72664 Kohlberg (DE)
(72) Erfinder: Klauss, Günter, D-72664 Kohlberg (DE)
(74) Vertreter: Patentanwälte Rüger, Barthelt & Abel

(56) Entgegenhaltungen:
- EP-A- 0 320 676
- CH-A- 510 103
- DE-C- 4 115 839

## Beschreibung

Aus der DE-C-41 15 839 ist ein kombiniertes Abdeck- und Dichtungsband bekannt, das einen bandförmigen, aus einem geschlossenen Schaumstoffmaterial bestehenden Träger aufweist. Auf jeder Seite des Trägers befindet sich in je einem Streifen selbsthaftender Klebstoff. Diese beiden Klebstoffstreifen sind jeweils schmäler als die halbe Breite des Trägers und bezüglich der Längsachse des Trägers punktsymmetrisch angeordnet, d.h. der eine Klebstoffstreifen grenzt an den einen Rand und der andere an den anderen Rand des Trägers an.

Dieses bekannte Abdeck- und Dichtungsband ist dazu vorgesehen, z.B. auf einem einzuputzenden Fensterrahmen aufgeklebt zu werden, ehe der Putz aufgebracht wird. Hierzu wird das bekannte Abdeck- und Dichtungsband mit einer Seite auf dem Fensterrahmen aufgeklebt, während die andere Seite zum Halten einer Abdeckfolie dient, die während des Verputzvorgangs den nicht einzuputzenden Teil des Fensterrahmens oder Fensters gegen Mörtelspritzer schützt.

Nach dem Einputzen des Fensters wird das bekannte Abdeck- und Dichtungsband längs der Ebene, die durch den Putz in der Fensterlaibung gebildet ist, abgeschnitten. Dadurch verbleibt ein Teil des Abdeck- und Dichtungsbandes zwischen Fenster und Putz und erbringt später die Dichtfunktion.

Eine Führungsfunktion während des Einputzens für das Maurerwerkzeug ist an der Fensterseite durch das bekannte Band nicht gegeben.

In der CH-A-510 103 ist ein Doppelklebeband für Buchbinderarbeiten beschrieben. Dieses Doppelklebeband besteht aus einem folienartigen dünnen Träger, der an seinen beiden Außenseiten mit einer Klebstoffbeschichtung versehen ist. Die Klebstoffbeschichtung reicht jedoch auf jeder Seite nur über die Hälfe der Gesamtbreite des Bandes, so daß neben jedem Klebstoffstreifen auf jeder Seite ein klebstofffreier Streifen angrenzt. Die beiden Klebstoffstreifen sind gegeneinander versetzt, weshalb ein Klebstoffstreifen auf der einen Seite des Trägers mit einem klebstofffreien Streifen auf der anderen Seite des Trägers korrespondiert. Dadurch soll erreicht werden, daß beim Zusammenkleben von zwei Einzelblättern nach dem Falzen um die Mittellinie eine klebrandlose Heftung von mehreren Blättern möglich ist.

Das DE-U-93 02 930 beschreibt ein Abdeckband für Lakkierarbeiten. Dieses Abdeckband besteht aus einem 0,lmm dünnen streifenförmigen Träger, der auf einer Seite durchgehend und über die gesamte Breite mit einer selbstklebenden Beschichtung versehen ist. Neben einem Rand dieses Klebebands befindet sich auf der klebenden Seite ein Verstärkungsstreifen, der eine deutlich geringere Biegsamkeit als der bandförmige Träger, auf dem er befestigt ist, und eine Stärke von ca 0,15mm aufweist.

Das bekannte Abdeckband dient bei Lackierarbeiten an Karosserien dazu, Dichtlippen abzuspreizen, damit die Lackierung auch unter der Dichtlippe vorgenommen werden kann, um unschöne Lackierränder zu vermeiden. Zu diesem Zweck wird das bekannte Abdeckband mit dem Verstärkungsstreifen voraus zwischen die Karosserie und die betreffende Dichtlippe eingeschoben und sodann wird der streifenförmige Träger nach dem Umschlagen um die Dichtlippe unter Spannung auf die Karosserie aufgeklebt. Der unter die Dichtlippe greifende Verstärkungsstreifen richtet die Dichtlippe auf, die von dem aufgeklebten Band in der aufgerichteten Stellung gehalten wird.

Damit der Verstärkungsstreifen diese Funktion erfüllen kann, soll er weniger als 150 µm dick sein.

Aufgabe der Erfindung ist es, ein selbstklebendes Band zu schaffen, das beim Einputzen von Tür- oder Fensterstöcken oder ähnlichen Anwendungen als Dichtung wirkt, die nicht einzuputzenden Bereiche gegen Verunreinigung schützt und gleichzeitig die Führung des Werkzeugs beim Einputzen gewährleistet, um einen geraden Kantenabschluß zu erhalten.

Zur Lösung dieser Aufgabe ist das selbstklebende Band durch die Merkmale des Anspruches 1 gekennzeichnet.

Da das neue selbstklebende Band auf einer Seite eine erhabene Leiste trägt und auf der gegenüberliegenden Seite mit einer selbstklebenden Klebstoffschicht versehen ist, kann es sowohl die Dicht- als auch die Führungsfunktion erfüllen. Die Dichtfunktion wird erbracht, weil das neue Band aufgrund seiner selbstklebenden Eigenschaften auf dem Türstock oder Fensterrahmen klebt und so die Trennstelle dichtet. Die Führungsleiste dagegen verbindet sich nach dem Einputzen mit dem Mauerwerk, womit ebenfalls die erforderliche Dichtung zustandekommt.

Das Mauerwerk läßt sich bündig mit der Leiste aufbringen, weil die Leiste gleichzeitig als Führungselement für die Maurerkelle oder Traufel dient, mit der der Putz aufgezogen oder geglättet wird.

Da das Band, auf dem die Führungsleiste sitzt, wesentlich breiter als die Leiste selbst ist, schützt das Band den unmittelbar an die Leiste angrenzenden Bereich gegen Verunreinigung.

Je nachdem, wie stark unterschiedlich die Ausdehnungskoeffizienten zwischen dem Mauerwerk und dem Türstock sind, kann es ausreichen, wenn der Träger eine einfache dünne, zwischen 30µm und 200µm starke Folie ist. Sind größere Toleranzen auszugleichen, beispielsweise weil auch mit einem Feuchtegang des Türstocks zu rechnen ist, d.h. der Tür- oder Fensterstock quillt oder schwindet je nach Feuchtigkeitsgehalt, kann als bandförmiger Träger auch ein geschlossenzelliges Schaumstoffmaterial von 1 bis 5 mm Stärke in Frage kommen.

Die geschlossenzellige Eigenschaft sorgt an der Schnittkante dafür, daß die Dichtigkeit erhalten bleibt.

Größere Bereiche können abgedeckt werden, wenn der bandförmige Träger auf derjenigen Seite, auf der die Führungsleiste angeordnet ist, einen weiteren Klebestreifen trägt, damit nach dem Aufbringen des neuen Abdeck- und Dichtungsbandes auf den Fensterstock gleichzeitig eine Verankerungsmöglichkeit für eine Abdeckfolie geschaffen wird. Diese Abdeckfolie wird auf den weiteren Klebstoffstreifen aufgeklebt und nach dem Vollenden des Verputzens zusammen mit dem längs der Führungsleiste abgeschnittenen Träger entfernt.

Das Abtrennen des nach dem Verputzen nicht mehr benötigten Trägermaterials wird vereinfacht, wenn der Träger eine über seine Länge durchlaufende Perforation aufweist, die mit der benachbarten Kante der flexiblen Führungsleiste fluchtet.

Weil die Leiste flexibel ist, kann das Band in Lieferform zu einer Rolle aufgewickelt sein, was den Transport wesentlich erleichtert.

Infolge der flexiblen Leiste entsteht beim Aufwickeln zu einer Rolle ein Wickel, der dazu neigt, zu einer Seite umzufallen. Es ist deswegen vorteilhaft, wenn auf einer gemeinsamen Hülse zwei Bänder zu Rollen aufgewickelt sind, die sich gegenseitig stützen.

Eine besonders gute Dichtwirkung wird erzielt, wenn die flexible Leiste mit einem Haftvermittler für mineralischen Mörtel versehen ist. Das Dichtungsband haftet dann dauerhaft sowohl auf dem Tür- oder Fensterstock als auch in dem Mörtel.

Die beiden Klebstoffstreifen erstrecken sich nicht über die gesamte Breite, so daß, bezogen auf einen Klebstoffstreifen, die jeweils gegenüberliegende Rückseite des Trägers von Klebstoff frei ist. Dadurch wird sowohl das Zurechtschneiden der Abdeckfolie als auch das nachträgliche Abziehen des nicht mehr benötigten Teils von der Unterlage wesentlich erleichtert.

Vorteilhafterweise ist bei dem neuen selbstklebenden Band der Klebstoff nicht unmittelbar auf den aus Schaumstoff bestehenden Träger aufgebracht, so daß beim Abziehen des nicht mehr benötigten Teils des selbstklebenden Bandes nach dem Einputzen zuverlässig der Klebstoff von der Unterlage abgezogen werden kann und nicht etwa der Träger sich der Länge nach spaltet, weil die Haftfähigkeit des Klebstoffs auf der Unterlage größer ist als der Zusammenhalt im aus Schaumstoff bestehenden Träger.

Wenn die beiden Außenseiten des Trägers die beim Produktionsprozeß unmittelbar entstehenden Seiten sind, tragen sie jeweils durchgehende Häute, die ein Eindringen von Wasser in den Schaumstoffträger weiter behindern und außerdem das Haften der den Klebstoff tragenden Folie begünstigen.

In den Zeichnungen ist ein Ausführungsbeispiel des Gegenstandes der Erfindung dargestellt. Es zeigen:
- Fig. 1: das erfindungsgemäße selbstklebende Band unter Veranschaulichung der einzelnen Lagen, die das Band aufweist, in einer perspektivischen Darstellung,
- Fig. 2: einen Querschnitt durch eine Mauerlaibung mit eingesetztem Tür- oder Fensterstock zur Veranschaulichung der Anwendung des erfindungsgemäßen selbstklebenden Bandes und
- Fig.3: eine andere Ausführungsform des neuen selbstklebenden Bands mit einem folienförmigen Träger.

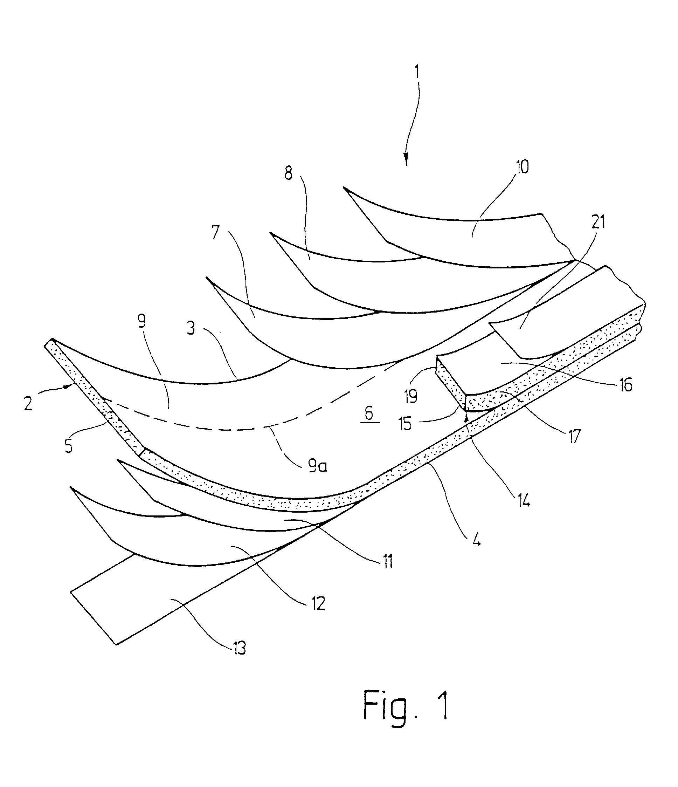

In Fig. 1 ist ein Abdeck- und Dichtungsband, insbesondere für Bauzwecke, veranschaulicht, das im Lieferzustand auf eine große Rolle aufgewickelt ist. Das Abdeck- und Dichtungsband 1 weist einen bandförmigen Träger 2 auf, der von zwei Rändern 3,4 begrenzt ist, die über die gesamte Länge des Abdeck- und Dichtungsbandes 1 denselben Abstand haben und im abgewickelten Zustand, wenn der Träger 2 eben liegt, gerade sind.

Zwischen den beiden Rändern 3,4 erstrecken sich zwei flache Außenseiten 5,6, die über die gesamte Länge des Trägers 2 den gleichen Abstand voneinander haben.

Der bandförmige Träger 2 ist ca. 3 mm dick und besteht aus einem geschlossenzelligen Hochdruckpolyethylen. Die beiden Außenseiten 5 und 6 sind die natürlichen Außenseiten, die beim Produktionsprozeß entstehen. Sie weisen deswegen durchgehende wasserdichte Häute auf, während die beiden Ränder 3,4 Schnittränder sind, an denen die zellförmige Struktur sichtbar ist.

An der in Fig. 1 nach oben weisenden Außenseite 6 verläuft neben dem Rand 3 eine dünne reißfeste PVC-Folie 7, die mit der Außenseite 6 stoffschlüssig mit Hilfe eines Klebstoffs verbunden ist. Auf ihrer von der Außenseite 6 wegweisenden Seite ist die PVC-Folie über ihre gesamte Breite mit einer selbsthaftenden Klebstoffschicht 8 versehen, so daß auf der Außenseite 6 neben dem Rand 3 ein durch die Klebstoffschicht 8 definierter Streifen 9 entsteht, der unmittelbar an den Rand 3 angrenzt und durch eine gestrichelte Linie 9a angedeutet ist. Zum Schutz der Klebstoffschicht 8 beim Aufwickeln des Abdeck- und Klebebandes 1 ist schließlich ein siliconhaltiges Schutzpapier 10 vorhanden, das nur gering auf der Klebstoffschicht 8 haftet und jederzeit abgezogen werden kann, ohne die Klebstoffschicht 8 von der Folie 7 herunterzureißen.

Die Breite des Streifens 9 der Klebstoffschicht 8, gemessen in Richtung des Abstandes der beiden Ränder 3,4 voneinander, ist geringfügig kleiner als die Breite des Trägers 2, die zwischen 4 und 5 cm liegt.

Auch die in Fig. 1 nach unten weisende Außenseite 5 trägt eine dünne PVC-Folie 11, die mit der Oberseite 5 mittels eines Klebstoffes stoffschlüssig verbunden ist. Ihre von der Außenseite 5 wegweisende Oberseite ist mit einer Klebstoffschicht 12 versehen, die vor Gebrauch des Abdeck- und Dichtungsbandes 1 mittels eines streifenförmigen Schutzpapiers 13 abgedeckt ist. Somit ist auch die Außenseite 5 mit einem Streifen versehen, innerhalb dessen sich die Klebstoffschicht 12 erstreckt, jedoch grenzt im Falle der Außenseite 5 dieser Streifen an den Rand 4 an. Die Breite dieses Streifens der Klebstoffschicht 12 ist gleich wie die Breite des Streifens 9, in dem die Klebstoffschicht 8 vorhanden ist, nämlich etwas geringer als die Hälfte der Breite des Trägers 2. Dadurch wird erreicht, daß beim Aufwickeln des Abdeck- und Dichtungsbandes 1 die Schutzpapiere 9 und 13 benachbarter Windungen nicht überlappend nebeneinander liegen. Da beide Schutzpapiere 9 und 13 die gleiche Stärke aufweisen, entsteht ein sauberer spiralförmiger Wickel ohne Verdickung in der Mitte zwischen den Lagen, was entweder dort den Träger 2 komprimieren oder zu einem unsicheren Wickel führen würde.

Da die beiden Streifen, innerhalb derer sich die Klebstoffschichten 8 und 12 befinden, auf unterschiedlichen Außenseiten 5,6 des Trägers 2 liegen und an unterschiedliche Ränder 3,4 angrenzen, ist das neue Abdeck- und Dichtungsband 1 bezüglich seiner Längsachse punktsymmetrisch aufgebaut, d.h. ein Umdrehen des Abdeck- und Dichtungsbandes 1 um seine Längsachse ändert das Aussehen, wie es in Fig. 1 dargestellt ist, nicht. In jedem Fall ist auf beiden Außenseiten 5,6 der klebfähige Bereich auf den durch die gestrichelte Linie 9a begrenzten Bereich 9 beschränkt, der weniger als die Hälfte der Breite des Trägers 2 ausmacht. Würden beide Streifen 9 auf ein und dieselbe Unterlage projiziert werden, würden die Streifen 9 einander nicht überdecken.

Neben dem Rand 4 ist auf dem streifenförmigen Träger 2 eine flexible Leiste 14 stoffschlüssig befestigt. Die flexible Leiste läuft über die Länge des Trägers 2 durch und ist steifer als der Träger 2. Sie besteht aus einem entsprechenden geschäumten Kunststoff. Die flexible Leiste 14 hat einen rechteckigen Querschnitt, wobei eine ihrer Flachseiten 15 auf dem Träger 2 aufliegt, während die andere Flachseite 16 von dem Träger 2 wegweist. Eine Schmalseite 17 ist mit dem Rand 3 bündig, während sich die andere Schmalseite 19 in der Nähe, jedoch im Abstand von dem Streifen 9 verläuft. Der Abstand der Flachseiten 15, 16, d.h. die Stärke der flexiblen Leiste 14 beträgt ca. 2 mm bis 10 mm.

Die Flachseite 16 ist mit einem Vlies 21 versehen, das als Haftvermittler für mineralischen Mörtel dient, d.h. nach dem Abbinden des Mörtels kommt eine stoffschlüssige Verbindung des Mörtels mit dem jeweils eingeputzten Gegenstand über das Band 1 zustande.

Anstelle von Schaumstoff für die flexible Leiste 14 kann auch Filz verwendet werden. Das Vlies 21 kann dann entfallen, weil sich der Mörtel ohne weiteres mit dem Filz verbindet.

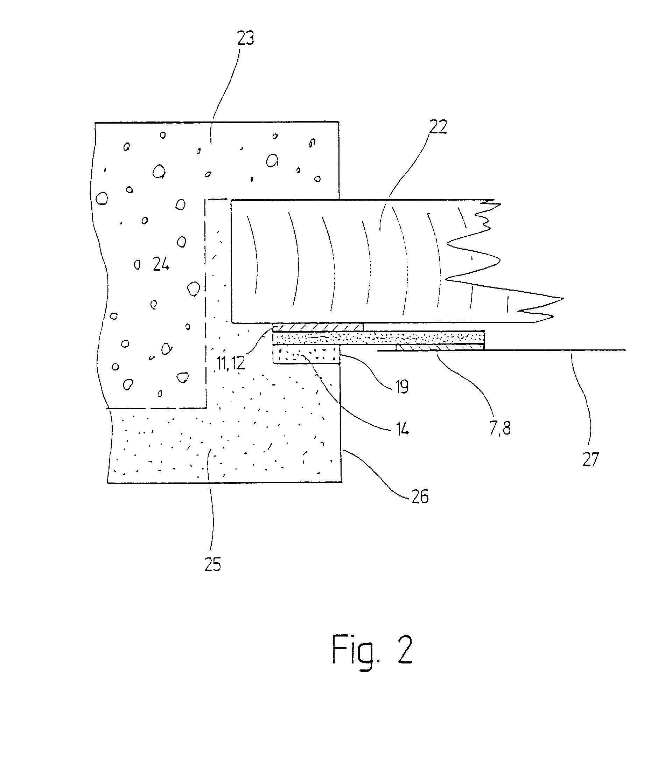

Die Verwendung des neuen Abdeck- und Dichtungsbandes ist in Fig. 2 veranschaulicht. Es dient dazu, einerseits einen Fenster- oder Türstock 22 in einer Mauerlaibung 23 abzudichten und andererseits gleichzeitig den nicht zu verputzenden Teil des Fenster- oder Türstocks 22 gegen Verunreinigung durch Mauerputz zu schützen.

Nach dem Einsetzen und Verankern des Tür- oder Fensterstocks 22 in einer entsprechenden Ausnehmung 24 der Mauerlaibung 23 wird nach Abziehen des Schutzpapiers 10 oder 13 das Abdeck- und Dichtungsband 1 auf derjenigen Seite des Tür- oder Fensterstocks 22 aufgeklebt, auf der später eine entsprechende Putzschicht 25 aufgebracht wird. Das Band 1 wird mit der die flexible Leiste 14 tragenden Seite nach außen von dem Türstock 22 wegweisend auf den Türstock 22 aufgeklebt. Infolge seiner selbsthaftenden Klebstoffschicht 8 ist das Abdeck- und Dichtungsband 1 stoffschlüssig mit dem Tür- oder Fensterstock 22 verbunden, und zwar ist es so platziert, daß der aufzutragende Putz 25 mit seiner Außenkante 26 mit der Kante 19 der flexiblen Leiste 14 bündig ist.

In Fig. 2 ist die Trägerfolie 11 zusammen mit der Klebstoffschicht 12 gemeinsam übertrieben veranschaulicht, um zu zeigen, in welchem Bereich das Abdeck- und Dichtungsband 1 auf dem Tür- oder Fensterstock 22 klebt.

Infolge dieser Art der Platzierung ragt das Abdeck- und Dichtungsband 1 über den später aufzubringenden Putz 25 in den freien Bereich und schützt den Tür- oder Fensterstock 22 gegen Verunreinigung durch Mauerputz an jenen Stellen, die nach dem Einputzen freibleiben sollen. Damit keine Putzspritzer die übrigen weiter abliegenden Teile bspw. des eingesetzten Türblatts oder Fensterrahmens verunreinigen, wird auch das andere Schutzpapier 9 bzw. 13 abgezogen, das infolge der Anordnung von dem Tür- oder Fensterstock 22 wegweist. Hierdurch entsteht ein durchgehender klebstoffhaltiger Streifen, auf dem eine dünne Schutzfolie 27 aufgeklebt wird, die die Öffnung des Tür- oder Fensterstocks 22 überspannt. Im Falle eines Fensterstocks kann die Folie 27 gleichzeitig einen provisorischen Verschluß für die Fensteröffnung bilden, wenn die Fensterflügel noch nicht eingesetzt sind.

Wie Fig. 2 erkennen läßt, reicht die Schutzfolie 27 bis fast an die spätere Putzschicht 25 heran, ohne beim späteren Anputzen zu stören. Der durch die Klebstoffschicht 8 gebildete Streifen verläuft in einem deutlichen Abstand von der Außenkante 26 des Putzes, da bereits die Klebstoffschicht 12, mit der das Abdeck- und Dichtungsband 1 an dem Türstock 22 aufgeklebt ist, über die Außenkante 26 des Putzes 25 übersteht.

Nachdem der Tür- oder Fensterstock 22, wie beschrieben, vorbereitet ist, kann der Putz 25 aufgetragen werden. Die Kante 19 wird als eine Führung der beim Einputzen verwendeten Traufel herangezogen, womit ein exakt gerader und sauberer Abschluß erreicht werden kann.

Sobald der Putz 25 ausgehärtet ist, wird, wenn auch die Schutzfolie 27 nicht mehr benötigt wird, mit einem scharfen Messer das Abdeck- und Dichtungsband 1 längs der Kante 19 durchgeschnitten und von dem Tür- oder Fensterstock 22 abgezogen, die auch hierbei als Führung dient.

Das Aufbringen der Klebstoffschicht 8 bzw. 12 auf die reißfeste Trägerfolie 7,11 verhindert dabei, daß der eventuell auf dem Tür- oder Fensterstock 22 gut haftende Klebstoff die oberste Schicht des Trägers 2 herunterreißt und zusammen mit dieser Schicht auf dem Tür- oder Fensterstock 22 kleben bleibt. Die reißfeste Trägerfolie 7, 11 vermeidet dies und erzwingt das Ablösen der Klebstoffschicht 8 bzw. 12 von dem Tür- oder Fensterstock 22.

Nach dem Einputzen und Abtrennen des überstehenden Teils des Abdeck- und Dichtungsbandes 1 verbleibt ein Teil in dem Spalt zwischen dem Tür- und Fensterstock 22 und dient als dauerelastische verwitterunqsbeständige Dichtung, die den unterschiedlichen Ausdehnungskoeffizienten zwischen dem Tür- und Fensterstock 22 einerseits und dem Mauerwerk andererseits aufnimmt. An beiden Seiten ist das neue Band 1 stoffschlüssig mit dem Mörtel bzw. dem Tür- oder Fensterstock 22 verbunden. Während des Einputzens hat der später über die Außenkante 26 überstehende Teil des Abdeck- und Dichtungsbandes 1 die Funktion eines Abdeckbandes, das Verunreinigungen des Tür- und Fensterstockes 22 durch Putzspritzer verhindert. Gleichzeitig dient dieser überstehende Teil als Träger für eine Schutzfolie, mit deren Hilfe auch die weitere Umgebung der zu verputzenden Laibung 23 geschützt werden kann.

Es besteht auch die Möglichkeit, die Leiste 14 genauso breit zu machen wie den Klebstoffstreifen 9 auf der rückwärtigen Flachseite 5 des Trägers 2. Dadurch wird erreicht, daß nach dem Einputzen und dem anschließenden Abschneiden des Bands 1 längs der Leiste 14 keine klebfähigen Reste auf dem Tür- oder Fensterstock 22 verbleiben.

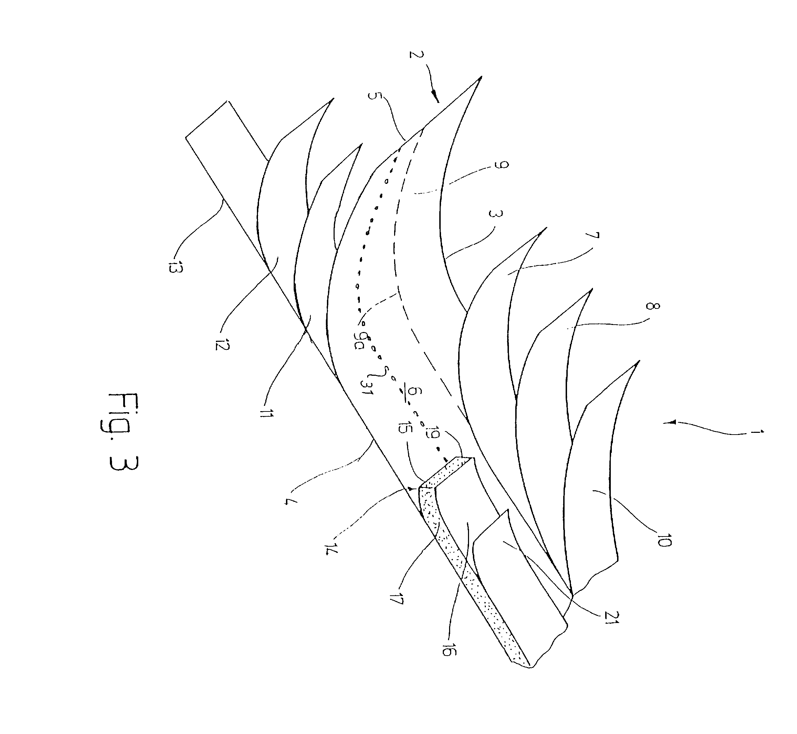

In Fig. 3 ist eine weitere Ausführungsform des neuen Abdeck- und Dichtungsbandes veranschaulicht. Soweit bei diesem Band Dinge auftauchen, die im Zusammenhang mit dem Ausführungsbeispiel nach den Fig. 1 und 2 bereits beschrieben sind, werden hierfür dieselben Bezugszeichen verwendet, ohne dazu eine erneute Beschreibung zu liefern.

Das Abdeck- und Dichtungsband 1 nach Fig. 3 unterscheidet sich von dem nach Fig. 1 im wesentlichen dadurch, daß der Träger 2 aus einer dünnen ungeschäumten Folie von ca. 30 bis 200 µm Stärke besteht. Im übrigen stimmen die Abmessungen mit denen des Trägers nach Fig. 1 überein.

Damit ohne Beschädigung nach dem Einputzen der überstehende Teil des Trägers 2 abgetrennt werden kann, ist zusätzlich eine Perforation 31 vorgesehen, die unmittelbar mit der Kante 19 der flexiblen Leiste 14 fluchtet. Dadurch kann der überstehende Teil des Trägers 2 nach dem Einputzen einfach abgerissen werden, zusammen mit der an dem Träger 2 mit Hilfe des klebfähigen Streifens 9 aufgeklebten Folie 27.

Schließlich besteht noch die Möglichkeit, die Ausführungsform nach Fig. 3 dahingehend abzuwandeln, daß der klebfähige Streifen 8 zusammen mit dem Verstärkungsstreifen 7 weggelassen wird, damit der Träger 2 in diesem Bereich nicht mehr klebfähig ist. Die Breite des Trägers 2, gemessen in Querrichtung, wird vorzugsweise auf 10 bis 15 cm vergrößert. Dadurch kann unter Umständen auch ohne die Verwendung der zusätzlich aufzuklebenden Folie 27 allein durch die Schutzwirkung des Trägers 2 ein ausreichender Schutz gegen Verunreinigung des Tür- oder Fensterstocks erreicht werden.

In der Lieferform sind vorzugsweise zwei Bänder 1 auf eine gemeinsame Hülse aufgewickelt. Wegen der einseitigen Verdickung des Bandes 1 durch die flexible Leiste 14 entsteht ein Wickel, der auf einer Seite zwischen den einzelnen Lagen Hohlräume aufweist. Der Wickel neigt dazu, in dieser Richtung umzufallen. Wenn aber, wie oben angegeben, zwei Wickel auf einer gemeinsamen Hüse angeordnet sind, wobei ihre flexiblen Leisten jeweils außen liegen, sind die Neigerichtungen beim Umkippen entgegengerichtet. Sie stützen sich deswegen gegenseitig ab, wodurch die Wickel stabilisiert werden.

Ein Abdeck- und Dichtungsband besteht aus einem streifenförmigen Träger, der auf einer Flachseite neben einer Kante eine flexible Leiste trägt. Diese flexible Leiste dient beim Einputzen sowohl als Dichtung als auch als Führung für eine Maurerkelle oder Traufel. Auf der gegenüberliegenden Seite ist der Träger im Bereich der Führungsleiste mit einer selbstklebenden Beschichtung versehen, um das Abdeck- und Dichtungsband auf den einzuputzenden Fensterstock oder Türstock aufkleben zu können.

## Patentansprüche

1. Selbstklebendes Abdeck- und Dichtungsband (1)
mit einem bandförmigen, zwei zueinander parallele Ränder (3,4) und zwei Außenseiten (5,6) aufweisenden Träger (2), aus einem dünnen flexiblen Material,
mit auf einer Außenseite (5,6) des Trägers (2) angeordnetem Klebstoff (8,12), der auf einen längs eines der Ränder (3,4) sich erstreckenden und an diesen angrenzenden Streifen (9) beschränkt ist, und
mit einer flexiblen Leiste (14), die auf der anderen Seite des Trägers und neben demselben Rand des Trägers angeordnet ist wie der Streifen (8) aus Klebstoff auf dem Träger (2), über dessen Länge durchlaufend vorgesehen ist und deren Stärke die Führung eine Werkzeugs ermöglicht.

2. Band nach Anspruch 1, dadurch gekennzeichnet, daß der Träger (1) aus einem geschlossenzelligen Schaumstoffmaterial besteht.

3. Band nach Anspruch 1, dadurch gekennzeichnet, daß der Träger (1) aus einer dünnen Folie besteht.

4. Band nach Anspruch 1, dadurch gekennzeichnet, daß der Träger (1) aus Kunststoff besteht.

5. Band nach Anspruch 1, dadurch gekennzeichnet, daß der Träger (1) mit einem weiteren Streifen (9) Klebstoff (8,12) versehen ist, der sich auf der Außenseite (5,6) des Trägers (2) mit der flexiblen Leiste (14) befindet, wobei der weitere Streifen (9) an den anderen Rand (3,4) angrenzt.

6. Band nach Anspruch 5, dadurch gekennzeichnet, daß zwischen der flexiblen Leiste (14) und dem benachbarten Streifen (8) mit Klebstoff ein nicht klebfähiger Bereich vorhanden ist.

7. Band nach Anspruch 1, dadurch gekennzeichnet, daß die flexible Leiste (14) an den einen Rand (4) des Trägers (2) angrenzt.

8. Band nach Anspruch 1, dadurch gekennzeichnet, daß die flexible Leiste (14) auf dem Träger (2) stoffschlüssig befestigt ist.

9. Band nach Anspruch 1, dadurch gekennzeichnet, daß der Träger (2) neben der flexiblen Leiste (14) mit einer Abreißperforation versehen ist.

10. Band nach Anspruch 1, dadurch gekennzeichnet, daß die flexible Leiste (14) einen rechteckigen Querschnitt aufweist.

11. Band nach Anspruch 1, dadurch gekennzeichnet, daß die flexible Leiste (14) aus Schaumstoff besteht.

12. Band nach Anspruch 1, dadurch gekennzeichnet, daß die flexible Leiste (14) aus Filz besteht.

13. Band nach Anspruch 1, dadurch gekennzeichnet, daß die flexible Leiste (14) auf ihrer von dem Träger (2) wegweisenden Seite (16) eine Beschichtung (21) trägt, auf der mineralischer Mörtel haftfähig ist.

14. Band nach Anspruch 13, dadurch gekennzeichnet, daß die Beschichtung von einem Vlies (21) gebildet ist, das vorzgsweise aus Polyesterfasern besteht.

15. Band nach Anspruch 1, dadurch gekennzeichnet, daß die Höhe der flexiblen Leiste (14) über dem Träger (2) zwischen 2 mm und 10 mm vorzugsweise um 5 mm liegt.

16. Band nach Anspruch 5, dadurch gekennzeichnet, daß beide Streifen (9) mit Klebstoff gleich breit sind.

17. Band nach Anspruch 5, dadurch gekennzeichnet, daß jeder Streifen (9) mit Klebstoff weniger als halb so breit wie der Träger (2) ist.

18. Band nach Anspruch 1, dadurch gekennzeichnet, daß jeder Streifen (9) mit Klebstoff einen der Breite des Streifens (9) mit Klebstoff entsprechenden Folienstreifen (7,11) aufweist, der mit dem Träger (2) des selbstklebenden Bandes (1) stoffschlüssig verbunden ist und der auf seiner von dem Träger wegweisenden Seite den Klebstoff (8,12) trägt.

19. Band nach Anspruch 18, dadurch gekennzeichnet, daß der Folienstreifen (7,11) aus einer reißfesten Folie besteht.

20. Band nach Anspruch 5, dadurch gekennzeichnet, daß jedem der beiden Streifen (9) eine eigene Schutzfolie bzw. ein eigenes Schutzpapier (10,13) zugeordnet ist, das beim endlosen Aufwickeln des selbstklebenden Bandes (1) auf einer Rolle ein Ankleben benachbarter Windungen verhindert.

21. Band nach Anspruch 20, dadurch gekennzeichnet, daß die Abdeckfolie oder Abdeckpapiere (10, 13) der beiden Klebstoff (8,12) aufweisenden Streifen (9) des selbstklebenden Bandes (1) jeweils weniger als die Hälfte des Trägers (2) des Abdeck- und Dichtungsbandes (1) breit sind, derart, daß bei aufgewickeltem selbstklebendem Band (1) die Schutzfolien oder Schutzpapiere (10,13) der beiden Klebstoff (8,12) aufweisenden Streifen (9) zwischen zwei aufeinanderliegenden Wicklungslagen einander nicht überlappen.

22. Band nach Anspruch 1, dadurch gekennzeichnet, daß der Träger aus geschäumtem Hochdruckpolyethylen besteht, der auf beiden Außenseiten (5,6) eine wasserundurchlässige Haut aufweist.

23. Band nach einem oder mehreren der vorhergehenden Ansprüche, dadurch gekennzeichnet, daß es zusammen mit einem weiteren gleich ausgefühten Band auf eine gemeinsame Hülse aufgewickelt ist, wobei die Ränder mit den angrenzenden flexiblen Leisten nach außen weisen.

24. Band nach einem oder mehreren der vorhergehenden Ansprüche, dadurch gekennzeichnet, daß die Leiste (14) genauso breit ist wie der Streifen (9) aus Klebstoff auf der anderen Seite (5) des Trägers (2).

## Claims

1. Self-adhesive masking and sealing tape (1)
with a support (2) in tape form having two parallel edges (3, 4) and two outsides (5, 6) and made of a thin flexible material,
with adhesive (8, 12), which is arranged on one outside (5, 6) of the support (2) and is restricted to a strip (9) extending along one of the edges (3, 4) and adjoining this, and
with a flexible strip (14), which is arranged on the other side of the support and adjacent to the same edge of the support as the strip (8) made of adhesive on the support (2), is provided to run continuously over the length thereof, and the thickness of which enables guidance of a tool.

2. Tape according to Claim 1, characterised in that the support (1) is made of a closed-cell foam material.

3. Tape according to Claim 1, characterised in that the support (1) is made of a thin foil.

4. Tape according to Claim 1, characterised in that the support (1) is made of plastic.

5. Tape according to Claim 1, characterised in that the support (1) is providedwithafurther strip (9) of adhesive (8, 12), which is located on the outside (5, 6) of the support (2) with the flexible cover strip (14), the further strips (9) adjoining the other edge (3, 4).

6. Tape according to Claim 5, characterised in that a non-adhesive region is provided between the flexible cover strip (14) and the adjacent strip (8) with adhesive.

7. Tape according to Claim 1, characterised in that the flexible cover strip (14) adjoins one edge (4) of the support (2).

8. Tape according to Claim 1, characterised in that the flexible cover strip (14) is bonded to the material of the support (2).

9. Tape according to Claim 1, characterised in that the support (2) adjacent to the flexible cover strip (14) is provided with a tear-off perforation.

10. Tape according to Claim 1, characterised in that the flexible cover strip (14) has a rectangular cross-section.

11. Tape according to Claim 1, characterised in that the flexible cover strip (14) is made of foam material.

12. Tape according to Claim 1, characterised in that the flexible cover strip (14) is made of felt.

13. Tape according to Claim 1, characterised in that on its side (16) facing away from the support (2), the flexible cover strip (14) bears a coating (21), to which mineral mortar can adhere.

14. Tape according to Claim 13, characterised in that the coating is formed from a nonwoven material (21) preferably made of polyester fibres.

15. Tape according to Claim 1, characterised in that the height of the flexible cover strip (14) above the support (2) amounts to between 2 mm and 10 mm, preferably 5 mm.

16. Tape according to Claim 5, characterised in that the two strips (9) with adhesive are of equal width.

17. Tape according to Claim 5, characterised in that each strip (9) with adhesive is less than half as wide as the support (2).

18. Tape according to Claim 1, characterised in that each strip (9) with adhesive has a foil strip (7, 11) corresponding to the width of the strip (9) with adhesive, said foil strip being bonded to the material of the support (2) of the self-adhesive tape (1) and carrying the adhesive (8, 12) on its side facing away from the support.

19. Tape according to Claim 18, characterised in that the foil strip (7, 11) is made of a tear-resistant foil.

20. Tape according to Claim 5, characterised in that each of the two strips (9) is allocated its own protective foil or its own protective paper (10, 13), which prevents adjacent coils from adhering when the self-adhesive tape (1) is continuously wound on a roll.

21. Tape according to Claim 20, characterised in that the covering foil or covering papers (10, 13) of the two strips (9) of the self-adhesive tape (1) provided with adhesive (8, 12) are respectively less than half as wide as the support (2) of the masking and sealing tape (1), such that when the self-adhesive tape (1) is wound, the protective foils or protective papers (10, 13) of the two strips (9) provided with adhesive (8, 12) between two superposed wound layers do not overlap one another.

22. Tape according to Claim 1, characterised in that the support is made of foamed high-pressure polyethylene, which has a skin impermeable to water on both outsides (5, 6).

23. Tape according to one or more of the preceding claims, characterised in that it is wound onto a joint shell together with a similarly configured tape, whereby the edges with the adjoining flexible cover strips point outwards.

24. Tape according to one or more of the preceding claims, characterised in that cover strip (14) has the same width as the strip (9) made of adhesive on the other side (5) of the support (2).

## Revendications

1. Bande adhésive de couverture et d'étanchéité (1) comprenant
un support (2) en forme de bande avec deux bords (3, 4) mutuellement parallèles et deux faces extérieures (5, 6), en un matériau souple, de faible épaisseur,
un adhésif (8, 12) appliqué sur une face extérieure (5, 6) du support (2), lequel adhésif est limité à un cordon (9) qui s'étend le long des bords (3, 4) et est adjacent à ceux-ci, et
une lame (14) souple qui est disposée sur l'autre face du support, à proximité du bord du support sur lequel est prévu le cordon (8) d'adhésif appliqué sur le support (2), qui s'étend de manière continue sur toute la longueur du support et dont l'épaisseur permet le guidage d'un outil.

2. Bande selon la revendication 1, caractérisée par le fait que le support (2) est formé d'un matériau expansé à cellules fermées.

3. Bande selon la revendication 1, caractérisée par le fait que le support (2) est formé d'un film fin.

4. Bande selon la revendication 1, caractérisée par le fait que le support (2) est en une matière plastique.

5. Bande selon la revendication 1, caractérisée par le fait que le support (2) est pourvu d'un cordon (9) supplémentaire d'adhésif (8, 12) qui est situé sur la face extérieure (5, 6) du support (2) portant la lame (14) souple, le cordon (9) supplémentaire étant adjacent à l'autre bord (3, 4).

6. Bande selon la revendication 5, caractérisée par le fait qu'un cordon non adhésif est prévu entre la lame (14) souple et le cordon contiguë (8) portant l'adhésif.

7. Bande selon la revendication 1, caractérisée par le fait que la lame (14) souple est adjacente à l'un des bords (4) du support (2).

8. Bande selon la revendication 1, caractérisée par le fait que la lame (14) souple est liée par matière au support (2).

9. Bande selon la revendication 1, caractérisée par le fait que le support (2) est pourvu de perforations de séparation à côté de la lame (14) souple.

10. Bande selon la revendication 1, caractérisée par le fait que la lame (14) souple a une section transversale rectangulaire.

11. Bande selon la revendication 1, caractérisée par le fait que la lame (14) souple est en une matière expansée.

12. Bande selon la revendication 1, caractérisée par le fait que la lame (14) souple est en feutre.

13. Bande selon la revendication 1, caractérisée par le fait que la lame (14) souple, sur sa face (16) éloignée du support (2), porte un revêtement (21) sur lequel adhère un mortier minéral.

14. Bande selon la revendication 13, caractérisée par le fait que le revêtement est formé d'un feutre (21), constitué de préférence de fibres polyester.

15. Bande selon la revendication 1, caractérisée par le fait que la hauteur de la lame (14) souple au dessus du support (2), est comprise entre 2 mm et 10 mm, et est de préférence de 5 mm.

16. Bande selon la revendication 5, caractérisée par le fait que les deux cordons (9) d'adhésif ont même largeur.

17. Bande selon la revendication 5, caractérisée par le fait que chaque cordon (9) portant l'adhésif présente une largeur inférieure à la moitié de la largeur du support (2).

18. Bande selon la revendication 1, caractérisée par le fait que chaque cordon (9) d'adhésif comporte une bande de film (7, 11) dont la largeur correspond à la largeur du cordon (9) d'adhésif, qui est liée par matière au support (2) de la bande adhésive (1) et porte l'adhésif (8, 12) sur sa face éloignée du support.

19. Bande selon la revendication 5, caractérisée par le fait que la bande de film (7, 11) est formée d'un film résistant à l'arrachement.

20. Bande selon la revendication 5, caractérisée par le fait qu'à chacun des deux cordons (9) est associé un film de protection individuel ou un papier de protection individuel (10, 13) qui empêche deux couches d'enroulement voisines de coller l'une sur l'autre lorsque la bande (1) est enroulée en continu sur une bobine.

21. Bande selon la revendication 20, caractérisée par le fait que le film de protection ou le papier de protection (10, 13) des deux cordons (9) d'adhésif (8, 12) de la bande adhésive (1) ont chacun une largeur inférieure à la moitié de la largeur du support (2) de la bande de couverture et d'étanchéité (1) de sorte que, lorsque la bande adhésive (1) est enroulée, les films de protection ou les papiers de protection (10, 13) des deux zones (9) d'adhésif (8, 12) entre deux couches d'enroulement superposées ne se chevauchent pas.

22. Bande selon la revendication 1, caractérisée par le fait que le support est en polyéthylène haute pression expansé, pourvu d'une peau imperméable à l'eau sur ses deux faces extérieures (5, 6).

23. Bande selon une ou plusieurs des revendications précédentes, caractérisée par le fait qu'elle est enroulée avec une autre bande de même structure sur un noyau commun, les bords comportant les lames souples étant tournés vers l'extérieur.

24. Bande selon une ou plusieurs des revendications précédentes, caractérisée par le fait que la lame (14) a une largeur égale à celle du cordon d'adhésif (9) appliqué sur l'autre face (5) du support (2).
